# EUROPEAN PATENT APPLICATION

(11) **EP 3 979 227 A2**
(43) Date of publication of application: **06.04.2022**
(21) Application number: 22155938.8
(22) Date of filing: 09.02.2022
(51) Int. Cl.: G09B 9/042, G09B 9/052, G09B 5/12, G09B 5/14

(54) **MOBILE DEVICE AND METHOD FOR ASSISTING DRIVING TRAINING, ELECTRONIC DEVICE AND COMPUTER PROGRAM PRODUCT**

(30) Priority: 18.06.2021 CN 202110679994
(71) Applicant: Apollo Intelligent Driving Technology (Beijing) Co., Ltd., Haidian District Beijing 100085 (CN)
(72) Inventor: XING, Liang, BEIJING, 100085 (CN); SONG, Shuqing, BEIJING, 100085 (CN); WU, Yi, BEIJING, 100085 (CN); YANG, Wentao, BEIJING, 100085 (CN); FENG, Yunchan, BEIJING, 100085 (CN); LUO, Qionghua, BEIJING, 100085 (CN); CAO, Xiaochen, BEIJING, 100085 (CN); WANG, Lifeng, BEIJING, 100085 (CN); WANG, Tao, BEIJING, 100085 (CN); WU, Fuchuang, BEIJING, 100085 (CN); ZHAO, Shuaishuai, BEIJING, 100085 (CN)
(74) Representative: Studio Torta S.p.A.

(57) **Abstract**

The present disclosure provides a mobile device and method for assisting driving training, an electronic device and a computer program product, relating to the field of computer technology, and in particular, to the field of mobile control technology. The mobile device includes: a communication module configured for acquiring training situations of a plurality of teaching vehicles from a server; a display module configured for displaying the training situations of the plurality of teaching vehicles; and a control module configured for generating a control command for driving training according to an instruction of a trainer in a training site, wherein the communication module is further configured for sending the control command to a vehicle-mounted terminal of a corresponding teaching vehicle. The technical solution may be applied to the training site, and controls the vehicle-mounted terminal based on the mobile device, thereby realizing mobile driving training and improving driving training effects.

## Description

### TECHNICAL FIELD

The present disclosure relates to the field of computer technology, and in particular, to the field of mobile control technology.

### BACKGROUND

The existing driving school training system includes a control end of a central control room and a vehicle-mounted terminal in a teaching vehicle. The control end is used for management of driving training, and a large screen thereof may display training images of a plurality of learner at the same time. The vehicle-mounted terminal is used to display training-related information of the learners. A trainer may make a voice communication with the vehicle-mounted terminal through the control end, so as to conduct remote driving train to the learners.

However, in the foregoing driving training process, the trainer can only view training situations of the learners on the large screen of the control end in the central control room, and conduct corresponding training guidance. This kind of teaching method is limited by the training situations displayed on the control end, and cannot achieve an effect of conducting training guidance by the trainer at a training site.

### SUMMARY

The present disclosure provides a mobile device and method for assisting driving training, an electronic device, and a storage medium.

According to an aspect of the present disclosure, there is provided a mobile device for assisting driving training, including:
a communication module configured for acquiring training situations of a plurality of teaching vehicles from a server;
a display module configured for displaying the training situations of the plurality of teaching vehicles; and
a control module configured for generating a control command for driving training according to an instruction of a trainer in a training site,
wherein the communication module is further configured for sending the control command to a vehicle-mounted terminal of a corresponding teaching vehicle.

According to another aspect of the present disclosure, there is provided a method for assisting driving training, wherein the method is applied to the mobile device and includes:
acquiring training situations of a plurality of teaching vehicles from a server;
displaying the training situations of the plurality of teaching vehicles;
generating a control command for driving training according to an instruction of a trainer in a training site, and
sending the control command to a vehicle-mounted terminal of a corresponding teaching vehicle.

According to another aspect of the present disclosure, there is provided an electronic device, including:
at least one processor; and
a memory communicatively connected with the at least one processor, wherein the memory stores instructions executable by the at least one processor, and the instructions, when executed by the at least one processor, enable the at least one processor to perform the method of any embodiment of the present disclosure.

According to another aspect of the present disclosure, there is provided a non-transitory computer-readable storage medium storing computer instructions, wherein the computer instructions, when executed by a computer, cause the computer to perform the method of any embodiment of the present disclosure.

According to another aspect of the present disclosure, there is provided a computer program product including computer program, wherein the computer program, when executed by a processor, implements the method of any embodiment of the present disclosure.

The technical solutions of the embodiments of the present disclosure may be applied to the training site, and control the vehicle-mounted terminal based on the mobile device, thereby realizing mobile driving training and improving driving training effects.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The drawings are used to better understand the solution and do not constitute a limitation to the present disclosure. In which:
FIG. 1 is a block diagram of a mobile device for assisting driving training according to an embodiment of the present disclosure;
FIG. 2 is a block diagram of a mobile device for assisting driving training according to an embodiment of the present disclosure;
FIG. 3 is a scenario diagram of local deployment of a server according to an embodiment of the present disclosure;
FIG. 4 is a scenario diagram of cloud deployment of a server according to an embodiment of the present disclosure;
FIG. 5 is a scenario diagram of communication among a mobile device, a vehicle-mounted terminal, and a local server according to an embodiment of the present disclosure;
FIG. 6 is a scenario diagram of communication among a mobile device, a vehicle-mounted terminal, and a cloud server according to an embodiment of the present disclosure;
FIG. 7 is a schematic diagram of a method for assisting driving training according to an embodiment of the present disclosure;
FIG. 8 is a schematic diagram of a method for assisting driving training according to an embodiment of the present disclosure; and
FIG. 9 is a block diagram of an electronic device for implementing a method for assisting driving training according to an embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and concisenes s.

The technical solutions of the embodiments of the present disclosure may be applied to a training site of driving training, and may be realized through the mobile device. The mobile device is usually a hand-held device of a trainer, and the trainer may observe training situations displayed on the mobile device, and may observe training situations on the training site. The mobile device may generate a control command according to an instruction of the trainer, and send the control command to a vehicle-mounted terminal of a teaching vehicle, so as to train the learner. This realizes mobile driving training and improves driving training effects.

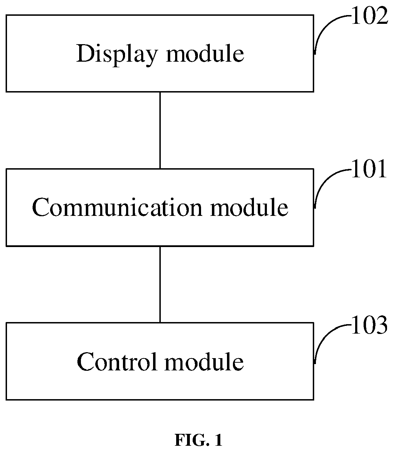

FIG. 1 is a block diagram of a mobile device for assisting driving training according to an embodiment of the present disclosure. As shown in FIG. 1, the mobile device includes:
a communication module 101 configured for acquiring training situations of a plurality of teaching vehicles from a server;
a display module 102 configured for displaying the training situations of the plurality of teaching vehicles; and
a control module 103 configured for generating a control command for driving training according to an instruction of a trainer in a training site,
wherein the communication module 101 is further configured for sending the control command to a vehicle-mounted terminal of a corresponding teaching vehicle.

Herein, the training situations of the teaching vehicles may include training images of learners driving the teaching vehicles, through which the trainer may know learning states of the learners and give corresponding training guidance. A quantity of teaching vehicles displayed on the display module 102 may be set as required, and a specific value is not limited.

Illustratively, the instruction of the trainer may be collected in a variety of ways, including but not limited to collecting a voice instruction of the trainer or collecting a touch screen operation of the trainer. This is not specifically limited in the embodiment of the present disclosure. The foregoing control command may control one vehicle-mounted terminal or a plurality of vehicle-mounted terminals, and the communication module 101 may send the control command to corresponding one or more vehicle-mounted terminals.

The foregoing mobile device provided in the embodiments of the present disclosure may be applied to the training site, and the mobile device is used to control the vehicle-mounted terminal. The training situations displayed on the mobile device and the training situations observed by the trainer on-site are combined to issue an instruction to train the learner. This realizes mobile driving training. Compared with a method that a trainer conducts, in a center control room, driving training based on images displayed on the control end, this greatly improves driving training effects. In addition, the trainer may quickly reach a teaching vehicle for teaching, and may also conduct remote teaching through the mobile device, which greatly improves flexibility of driving training and is more widely used.

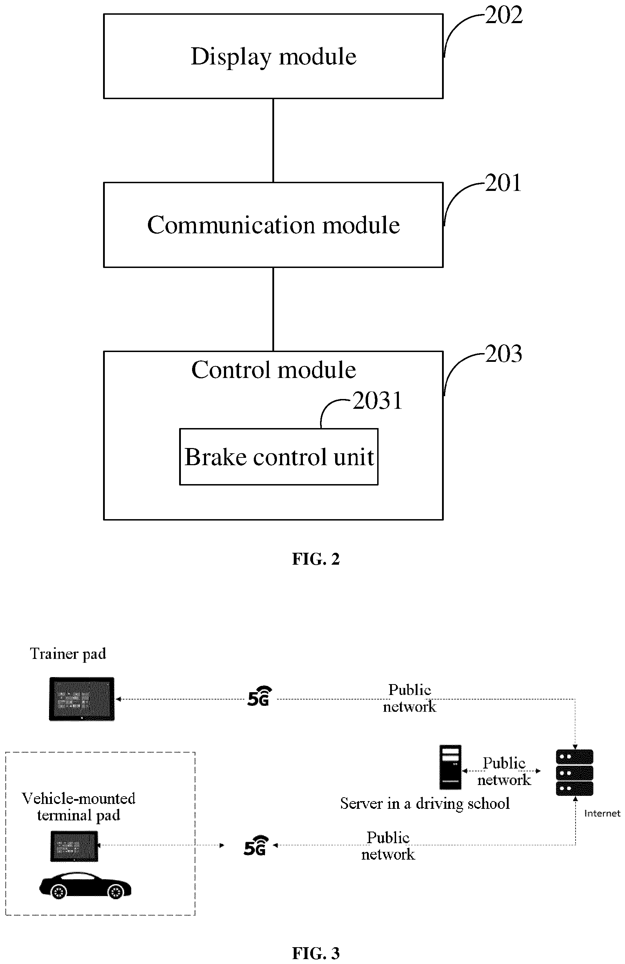

FIG. 2 is a block diagram of a mobile device for assisting driving training according to an embodiment of the present disclosure. As shown in FIG. 2, the mobile device includes: a communication module 201, a display module 202, and a control module 203. The communication module 201 and the display module 202 respectively have the same functions as the communication module 101 and the display module 102 in the foregoing embodiment, and details are not described herein again. In an implementation, the control module 203 includes: a brake control unit 2031 configured for generating a brake command for controlling a corresponding teaching vehicle to stop, according to a brake instruction of a trainer in a training site.

Illustratively, the foregoing brake command may be sent to a vehicle-mounted terminal of a corresponding teaching vehicle through the communication module 101. Correspondingly, the brake command may directly control the teaching vehicle to stop. Specifically, this may be realized by a brake actuator installed on the vehicle, to complete an operation of controlling the teaching vehicle to stop. For scenarios such as an operating error of a learner or an abnormal training situation, this method can ensure an emergency stop of the vehicle, prevent occurrence of a dangerous situation, and improve safety of the driving training.

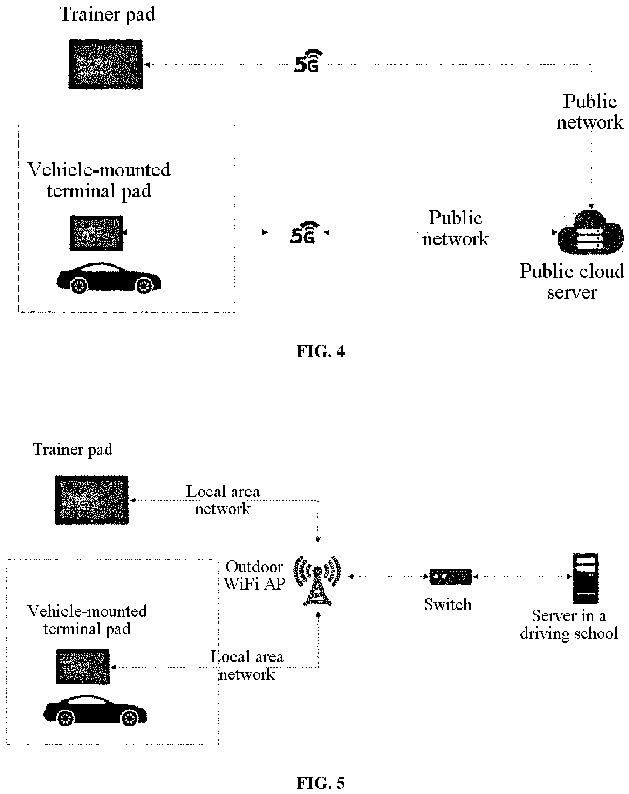

The server in the embodiments of the present disclosure refers to a server configured for driving training, and is usually a server deployed in a driving school. The server may be deployed locally in the driving school, and may also be deployed in a cloud. In an implementation, a scenario that the server is deployed locally is shown in FIG. 3. The server in the driving school may access the Internet through a 5G public network. The mobile device and the vehicle-mounted terminal may also access the Internet through the 5G public network, and the mobile device and the vehicle-mounted terminal may further communicate with each other through the 5G public network. In another implementation, a scenario that the server is deployed in the cloud is shown in FIG. 4. Both the mobile device and the vehicle-mounted terminal access a public cloud server through the 5G public network.

In an implementation, the communication module 101 is further configured for acquiring vehicle information of the plurality of teaching vehicles from the server, and the display module 102 is further configured for displaying the vehicle information of the plurality of teaching vehicles.

The foregoing way of acquiring the vehicle information and displaying the vehicle information allows the trainer to know a condition of the vehicle on the basis of knowing the training situation, and to be able to grasp information regarding whether the vehicle is normal or abnormal in time, so as to give corresponding training guidance.

Thus, an effect of accurately guiding driving training is achieved.

Herein, the foregoing vehicle information may include at least one of a real-time location of a vehicle or whether the vehicle is abnormal. By displaying the real-time location of the vehicle or displaying whether the vehicle is abnormal, the trainer can monitor the location of the vehicle in real time, accurately grasp vehicle dynamics and an abnormal state of the vehicle, so as to give a precise instruction, and then train the learner. Thus, the precision and accuracy of the control command are improved.

In the embodiments of the present disclosure, the vehicle-mounted terminal may also send alarm information to the mobile device in a case where there is abnormal in a driving process, thereby enabling the trainer to know the abnormal situation in time. In a case where the trainer issues a release instruction, the mobile device may also dismiss the alarm.

In an implementation, the communication module 101 is further configured for:
performing voice or video communication with any one of vehicle-mounted terminals of the plurality of teaching vehicles, or performing group voice or video communication with at least two of the vehicle-mounted terminals of the plurality of teaching vehicles.

Herein, performing voice or video communication with a vehicle-mounted terminal may allow the trainer to conduct targeted driving training guidance to a learner, which is more personalized and has a more obvious training effect. In a case where voice or video communication is performed with at least two vehicle-mounted terminals, a plurality of vehicle-mounted terminals may be guided synchronously in a group manner, which can realize synchronized driving training guidance for a plurality of learners, and improve driving training efficiency.

In an implementation, the communication module 101 is further configured for:
communicating with a control end of a central control room through the server, and synchronizing data.

In the embodiments of the present disclosure, the control end of the central control room is also configured for monitoring and managing the training situations. Generally, the control end has a larger display screen than the mobile device, to observe the training situations more intuitively. By synchronizing data of the mobile device and data of the control end, an effect of synchronously monitoring the driving training in the training site and the central control room can be achieved.

In an implementation, the foregoing mobile device further includes:
a recording module configured for recording at least one of study time information, training process information, assessment information, or teaching log information of a learner.

Recording the foregoing information through the recording module can facilitate the trainer to view and know various driving training information of the learner at any time, and can plan or adjust a subsequent training course based on these information, which improves the flexibility of driving training.

In an implementation, the foregoing mobile device further includes:
a playing module configured for performing a historical playback operation on the training situations of the plurality of teaching vehicles.

Herein, there are many ways for historical playback, including but not limited to two-dimensional track playback and three-dimensional perspective playback. The trainer may select a suitable way to perform the historical playback operation as required. Through the historical playback, the trainer may observe the training situation of the learner again or repeatedly, to make an analysis in time and provide more accurate guidance for subsequent driving training.

In an implementation, the communication module 101 communicates with the server and the vehicle-mounted terminals of the plurality of teaching vehicles through 4G, 5G or WiFi.

The plurality of communication modes mentioned above provide a plurality of practicable solutions for network deployment. In an actual application, a suitable communication mode may be selected as required, so as to adapt to different scenario requirements and have a wider range of application.

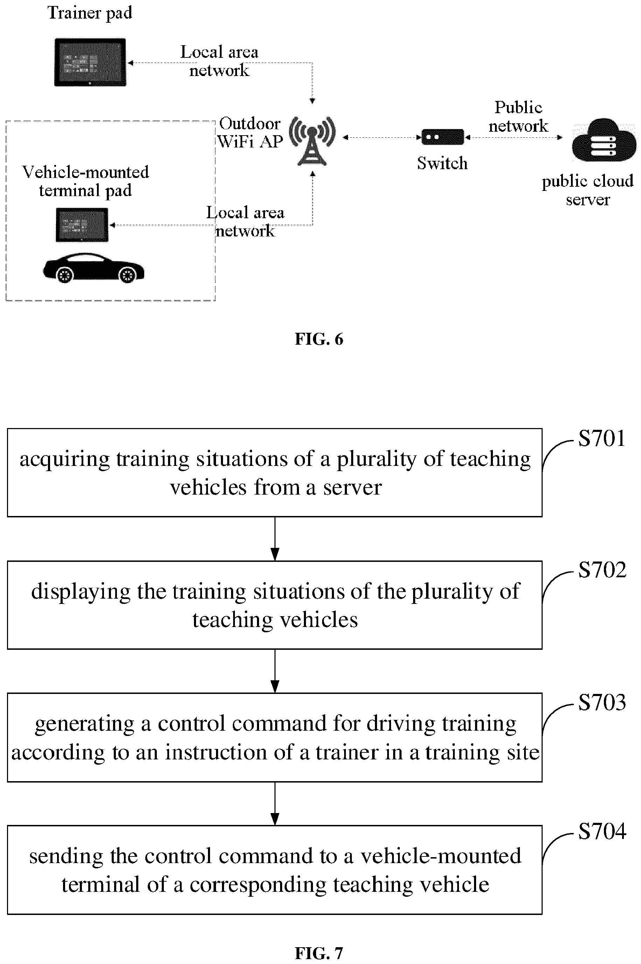

In a case where the mobile device and the vehicle-mounted terminal in the embodiments of the present disclosure communicate with each other in a WiFi mode, this may usually be completed with a WiFi hotspot in a local area network. Communication scenarios are shown in FIG. 5 and FIG. 6. In an implementation, the server is deployed locally, as shown in FIG. 5. The server accesses the foregoing local area network through a switch, so as to complete the communication among the mobile device, the vehicle-mounted terminal, and the server deployed in the driving school. In another implementation, the server is deployed in the cloud, as shown in FIG. 6. The server may access the foregoing local area network through a public network and a switch, so as to complete the communication among the mobile device, the vehicle-mounted terminal, and a public cloud server.

FIG. 7 is a schematic diagram of a method for assisting driving training according to an embodiment of the present disclosure. As shown in FIG. 7, the method is applied to the mobile device, and includes:
S701: acquiring training situations of a plurality of teaching vehicles from a server;
S702: displaying the training situations of the plurality of teaching vehicles;
S703: generating a control command for driving training according to an instruction of a trainer in a training site; and
S704: sending the control command to a vehicle-mounted terminal of a corresponding teaching vehicle.

The foregoing method provided in the embodiments of the present disclosure may be applied to the training site, and controls the vehicle-mounted terminal based on the mobile device, thereby realizing mobile driving training and improving driving training effects.

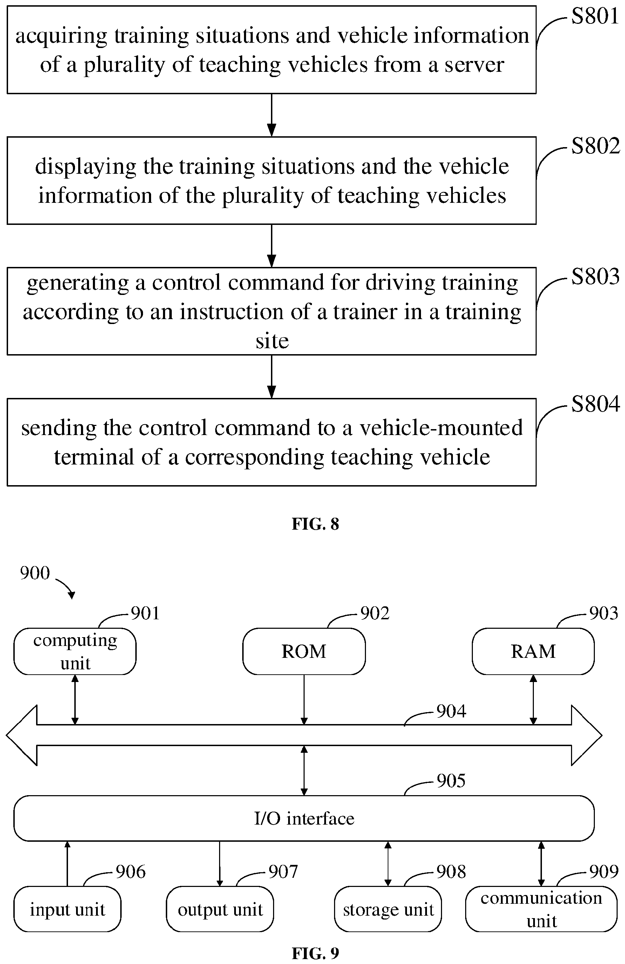

FIG. 8 is a schematic diagram of a method for assisting driving training according to an embodiment of the present disclosure. As shown in FIG. 8, the method is applied to the mobile device, and includes:
S801: acquiring training situations and vehicle information of a plurality of teaching vehicles from a server;
S802: displaying the training situations and the vehicle information of the plurality of teaching vehicles;
wherein the foregoing vehicle information may include at least one of a real-time location of a vehicle or whether the vehicle is abnormal, which is not specifically limited;
S803: generating a control command for driving training according to an instruction of a trainer in a training site;
illustratively, the trainer may give a corresponding instruction in the training site according to the training situation displayed on the mobile device and in combination with the training situation observed on the site, so as to conduct driving train to the learner; and
S804: sending the control command to a vehicle-mounted terminal of a corresponding teaching vehicle.

In an implementation, the generating the control command for driving training according to the instruction of the trainer in the training site, includes:
generating a brake command for controlling the corresponding teaching vehicle to stop, according to a brake instruction of the trainer in the training site.

In an implementation, the foregoing method further includes:
performing voice or video communication with any one of vehicle-mounted terminals of the plurality of teaching vehicles, or performing group voice or video communication with at least two of the vehicle-mounted terminals of the plurality of teaching vehicles.

In an implementation, the foregoing method further includes:
communicating with a control end of a central control room through the server, and synchronizing data.

In an implementation, the foregoing method further includes:
recording at least one of study time information, training process information, assessment information, or teaching log information of a learner.

In an implementation, the foregoing method further includes:
performing a historical playback operation on the training situations of the plurality of teaching vehicles.

In an implementation, the foregoing mode of communicating with the server and the vehicle-mounted terminals of the plurality of teaching vehicles includes 4G, 5G or WiFi.

In the technical solutions of the present disclosure, acquisition, storage, and application of personal information of a user are in compliance with relevant laws and regulations, and does not violate public order and good customs.

According to embodiments of the present disclosure, the present disclosure also provides an electronic device, a readable storage medium and a computer program product.

FIG. 9 shows a schematic block diagram of an example electronic device 900 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 9, the electronic device 900 includes a computing unit 901 that may perform various suitable actions and processes in accordance with computer programs stored in a read only memory (ROM) 902 or computer programs loaded from a storage unit 908 into a random access memory (RAM) 903. In the RAM 903, various programs and data required for the operation of the electronic device 900 may also be stored. The computing unit 901, the ROM 902 and the RAM 903 are connected to each other through a bus 904. An input/output (I/O) interface 905 is also connected to the bus 904.

A plurality of components in the electronic device 900 are connected to the I/O interface 905, including: an input unit 906, such as a keyboard, a mouse, etc.; an output unit 907, such as various types of displays, speakers, etc.; a storage unit 908, such as a magnetic disk, an optical disk, etc.; and a communication unit 909, such as a network card, a modem, a wireless communication transceiver, etc. The communication unit 909 allows the electronic device 900 to exchange information/data with other devices over a computer network, such as the Internet, and/or various telecommunications networks.

The computing unit 901 may be various general purpose and/or special purpose processing assemblies having processing and computing capabilities. Some examples of the computing unit 901 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 901 performs various methods and processes described above, such as the method for assisting driving training. For example, in some embodiments, the method for assisting driving training may be implemented as computer software programs that are physically contained in a machine-readable medium, such as the storage unit 908. In some embodiments, some or all of the computer programs may be loaded into and/or installed on the electronic device 900 via the ROM 902 and/or the communication unit 909. In a case where the computer programs are loaded into the RAM 903 and executed by the computing unit 901, one or more of steps of the above method for assisting driving training may be performed. Alternatively, in other embodiments, the computing unit 901 may be configured to perform the method for assisting driving training in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, and may also be a server of a distributed system, or a server incorporating a blockchain.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A mobile device for assisting driving training, comprising:
a communication module (101, 201) configured for acquiring training situations of a plurality of teaching vehicles from a server;
a display module (102, 202) configured for displaying the training situations of the plurality of teaching vehicles; and
a control module (103, 203) configured for generating a control command for driving training according to an instruction of a trainer in a training site,
wherein the communication module (101, 201) is further configured for sending the control command to a vehicle-mounted terminal of a corresponding teaching vehicle.

2. The mobile device of claim 1, wherein the control module (203) comprises:
a brake control unit (2031) configured for generating a brake command for controlling the corresponding teaching vehicle to stop, according to a brake instruction of the trainer in the training site.

3. The mobile device of claim 1 or 2, wherein the communication module (101, 201) is further configured for acquiring vehicle information of the plurality of teaching vehicles from the server; and
the display module (102, 202) is further configured for displaying the vehicle information of the plurality of teaching vehicles,
optionally,
wherein the vehicle information comprises at least one of a real-time location of a vehicle or whether the vehicle is abnormal.

4. The mobile device of any one of claims 1 to 3, wherein the communication module (101, 201) is further configured for at least one of:
performing voice or video communication with any one of vehicle-mounted terminals of the plurality of teaching vehicles, or performing group voice or video communication with at least two of the vehicle-mounted terminals of the plurality of teaching vehicles, and
communicating with a control end of a central control room through the server, and synchronizing data.

5. The mobile device of any one of claims 1 to 4, further comprising at least one of:
a recording module configured for recording at least one of study time information, training process information, assessment information, or teaching log information of a learner, and
a playing module configured for performing a historical playback operation on the training situations of the plurality of teaching vehicles.

6. The mobile device of any one of claims 1 to 5, wherein the communication module communicates with the server and the vehicle-mounted terminals of the plurality of teaching vehicles through 4G, 5G or WiFi.

7. A method for assisting driving training, wherein the method is applied to a mobile device, and comprises:
acquiring (S701) training situations of a plurality of teaching vehicles from a server;
displaying (S702) the training situations of the plurality of teaching vehicles;
generating (S703) a control command for driving training according to an instruction of a trainer in a training site; and
sending (S704) the control command to a vehicle-mounted terminal of a corresponding teaching vehicle.

8. The method of claim 7, wherein the generating (S703) the control command for driving training according to the instruction of the trainer in the training site, comprises:
generating a brake command for controlling the corresponding teaching vehicle to stop, according to a brake instruction of the trainer in the training site.

9. The method of claim 7 or 8, further comprising:
acquiring vehicle information of the plurality of teaching vehicles from the server, and displaying the vehicle information of the plurality of teaching vehicles,
optionally,
wherein the vehicle information comprises at least one of a real-time location of a vehicle or whether the vehicle is abnormal.

10. The method of any one of claims 7 to 9, further comprising at least one of:
performing voice or video communication with any one of vehicle-mounted terminals of the plurality of teaching vehicles, or performing group voice or video communication with at least two of the vehicle-mounted terminals of the plurality of teaching vehicles, and
communicating with a control end of a central control room through the server, and synchronizing data.

11. The method of any one of claims 7 to 10, further comprising at least one of:
recording at least one of study time information, training process information, assessment information, or teaching log information of a learner, and
performing a historical playback operation on the training situations of the plurality of teaching vehicles.

12. The method of any one of claims 7 to 11, wherein a way of communicating with the server and the vehicle-mounted terminals of the plurality of teaching vehicles comprises 4G, 5G or WiFi.

13. An electronic device, comprising:
at least one processor; and
a memory communicatively connected with the at least one processor,
wherein the memory stores instructions executable by the at least one processor, and the instructions, when executed by the at least one processor, enable the at least one processor to perform the method of any one of claims 7 to 12.

14. A non-transitory computer-readable storage medium storing computer instructions, wherein the computer instructions, when executed by a computer, cause the computer to perform the method of any one of claims 7 to 12.

15. A computer program product comprising a computer program, wherein the computer program, when executed by a processor, implements the method of any one of claims 7 to 12.
